# EUROPÄISCHE PATENTANMELDUNG

(11) **EP 4 733 622 A1**
(43) Veröffentlichungstag der Anmeldung: **29.04.2026**
(21) Anmeldenummer: 25203570.4
(22) Anmeldetag: 22.09.2025
(51) Int. Cl.: F16G 13/04, B61B 13/02, F16G 13/08, F16H 7/06, F16H 19/04, F16H 19/06, F16H 55/26

(54) **ZAHNKETTENVORRICHTUNG MIT KRAFTERHÖHENDER ABSTÜTZEINRICHTUNG UND KORRESPONDIERENDER ZAHNKETTENANTRIEB**

(30) Priorität: 23.10.2024 DE 102024130839
(71) Anmelder: Brehm, Bernhard, 75265 Calw-Stammheim (DE); Just, Manfred, 76709 Kronau (DE); Fetzner, Roland, 76646 Bruchsal (DE)
(72) Erfinder: Brehm, Bernhard, 75365 Calw-Stammheim (DE)
(74) Vertreter: Spachmann, Holger

(57) **Zusammenfassung**

Die Erfindung betrifft eine Zahnkettenvorrichtung (10) umfassend eine flexible und geschlossene Zahnkette (16), aufweisend eine innenliegende Verzahnung (18) und eine außenliegende Verzahnung (20), und zumindest zwei Innenzahnräder (22), die zwischen gegenüberliegenden Endbogenbereichen der Zahnkette (16) angeordnet sind und im Eingriff mit der innenliegenden Verzahnung (18) der Zahnkette (16) stehen, wobei die außenliegende Verzahnung (20) mit zumindest einer Außenzahnschiene (14) oder zumindest einem Außenzahnrad in Eingriff bringbar ist, und wobei an gegenüberliegenden Seitenflanken der Zahnkette (16) jeweils zumindest eine Reihe von Kettenlaschen (24) angeordnet ist, deren Konturbereiche eine innenliegende und eine außenliegende Führungsbahn (26) der Zahnkette (16) definieren.

Es ist vorgesehen, dass eine Abstützeinrichtung (28) mit beidseitig an den Seitenflanken angeordneten und sich entlang der Führungsbahn (26) der Zahnkette (16) erstreckenden Verstärkungselementen (30) umfasst ist, wobei die Verstärkungselemente (30) eine Mehrzahl von drehbar gelagerten Führungsrollen (32) umfassen.

## Beschreibung

Die Erfindung betrifft eine Zahnkettenvorrichtung mit krafterhöhender Abstützeinrichtung Weiterhin betrifft die Erfindung einen Zahnkettenantrieb mit einer solchen Zahnkettenvorrichtung

### STAND DER TECHNIK

Zahnkettenvorrichtungen sind aus dem Stand der Technik grundsätzlich bekannt.

So offenbart beispielsweise die WO 2022/042870 A1 des Anmelders einen linearen Zahnkettentrieb. Der Zahnkettenantrieb umfasst eine ortsfeste Außenzahnschiene und eine Zahnkettenvorrichtung, wobei die Zahnkettenvorrichtung durch einen Antrieb entlang der Außenzahnschiene linear verfahrbar ist. Die Zahnkettenvorrichtung umfasst eine Zahnkette mit einer innenliegenden Verzahnung und einer außenliegenden Verzahnung. Die außenliegende Verzahnung steht zum Verfahren der Zahnkettenvorrichtung mit der Außenzahnschiene in Eingriff, sodass die Zahnkettenvorrichtung mit ihrer Zahnkette an der korrespondierenden Verzahnung der Außenzahnschiene entlang bewegt werden kann, wobei durch die Außenzahnschiene eine Fahrbahn für die Zahnkettenvorrichtung vorgegeben ist. Die Zahnkettenvorrichtung umfasst weiterhin zwei, zwischen gegenüberliegenden Endbogenbereichen der Zahnkette angeordnete, Innenzahnräder, die mit der innenlegenden Verzahnung in Eingriff stehen. Die Innenzahnräder sind kinematisch mit einem Antrieb gekoppelt und durch diesen antreibbar. Durch die in Eingriff stehenden Verzahnungen wird die Antriebskraft von den Innenzahnrädern auf die Zahnkette und von dieser auf die ortsfest angeordnete Außenzahnschiene übertragen, sodass die Zahnkette und damit die Zahnkettenvorrichtung, wie zuvor erwähnt, beim Antreiben entlang der Außenzahnschiene verfahrbar ist. An gegenüberliegenden Seitenflanken der Zahnkette ist jeweils zumindest eine Reihe von Kettenlaschen angeordnet. Die Kettenlaschen dienen zur mechanischen Verbindung und Positionsstabilisierung einzelner Kettenglieder der Zahnkette. Jeweilige Konturbereiche der Reihen von Kettenlaschen definieren dabei eine innenliegende und eine außenliegende Führungsbahn der Zahnkette.

Der bekannte Zahnkettenantrieb bzw. die bekannte Zahnkettenvorrichtung wird primär im Zusammenhang mit der Steuerung von Anlagen verschiedenster technischer Bereiche, insbesondere im Schwerlastbereich, verwendet. Ein populäres Beispiel sind Lasten- und Personenaufzüge, wobei Transportkörbe der jeweiligen Aufzüge mittels des Zahnkettenantriebs zuverlässig und effektiv innerhalb der korrespondierenden Aufzugsschächte verfahren werden können. Ein weiteres Anwendungsbeispiel ist der Materialtransport in Hochregallagern und dazu gehörige Transportmittel wie Transportbänder, Gabelstapler, Seilbahnen, Hängebahnen etc., bei welchen durch den Zahnkettenantrieb ein zuverlässiger Antrieb von verschiedensten korrespondierenden Komponenten bereitgestellt ist. Der Anwendungsbereich ist darauf nicht beschränkt und kann an vielen Stellen der Technik eingesetzt werden.

Insbesondere bei besonders hohen Lasten besteht das Risiko, dass die Lastgrenze des bekannten Zahnkettenantriebs bzw. der bekannten Zahnkettenvorrichtung überschritten wird. So kann es vorkommen, dass aufgrund der hohen zu bewegenden Last die Zahnkette temporär von der Außenzahnschiene abhebt oder durchrutscht. Dieses Risiko ist dann erhöht, wenn die durch die Außenzahnschiene vorgegebene Fahrbahn konvexe oder konkave Verläufe aufweist, also mittels des Zahnkettenantriebs bewegte Transportvorrichtungen um Kurven, Ecken oder Bögen verfahren werden, und wenn eine Kraftübertragungsgrenze überschritten wird. Durch das Abheben oder Durchrutschen und die damit einhergehende aufgehobene Kraftübertragung von Zahnkettenantrieb auf Außenzahnschiene ergibt sich die Gefahr eines Defekts oder Unfalls. Da aufgrund des potenziell möglichen Abhebens / Durchrutschens der Zahnkette von der Außenzahnschiene und dem damit einhergehenden temporären Lösen des Eingriffs der Verzahnungen das Unfall- und Defektrisiko erhöht ist, besteht ein Bedarf an Verbesserungen.

Eine Aufgabe der Erfindung ist es, eine bezüglich der oben genannten Problematik verbesserte Zahnkettenvorrichtung und einen verbesserten Zahnkettenantrieb bereitzustellen, bei welchen das Risiko des temporären Abhebens bzw. Durchrutschens der Zahnkette von der Außenzahnschiene minimiert ist. Eine weitere Aufgabe der Erfindung ist eine Erhöhung einer Kraftübertragungsgrenze der Zahnkettenvorrichtung.

Diese Aufgabe wird durch eine Zahnkettenvorrichtung und einen Zahnkettenantrieb nach den unabhängigen Ansprüchen gelöst. Vorteilhafte Ausbildungen der Erfindung sind Gegenstand der Unteransprüche.

### OFFENBARUNG DER ERFINDUNG

Die Erfindung geht aus von einer Zahnkettenvorrichtung umfassend eine flexible und geschlossene Zahnkette, aufweisend eine innenliegende Verzahnung und eine außenliegende Verzahnung. Die Zahnkettenvorrichtung umfasst weiterhin zumindest zwei Innenzahnräder, die zwischen gegenüberliegenden Endbogenbereichen der Zahnkette angeordnet sind und im Eingriff mit der innenliegenden Verzahnung der Zahnkette stehen. Die außenliegende Verzahnung ist mit zumindest einer Außenzahnschiene oder zumindest einem Außenzahnrad in Eingriff bringbar. An gegenüberliegenden Seitenflanken der Zahnkette ist jeweils zumindest eine Reihe von Kettenlaschen angeordnet, deren Konturbereiche eine innenliegende und eine außenliegende Führungsbahn der Zahnkette definieren.

Erfindungsgemäß ist vorgesehen, dass eine Abstützeinrichtung mit beidseitig an den Seitenflanken angeordneten und sich entlang der Führungsbahn der Zahnkette erstreckenden Verstärkungselementen umfasst ist, wobei die Verstärkungselemente eine Mehrzahl von drehbar gelagerten Führungsrollen umfassen, und wobei die Führungsrollen zumindest abschnittsweise die innenliegende und/oder die außenliegende Führungsbahn der Zahnkette abstützt, sodass durch die Abstützeinrichtung eine zumindest abschnittsweise Zwangsführung der Zahnkette gebildet ist.

Durch die erfindungsgemäße Abstützeinrichtung wird die Zahnkette vorteilhaft gegen die Außenzahnschiene bzw. das Außenzahnrad gepresst. Die Führungsrollen stützen sich auf den Konturbereichen der Kettenlaschen ab, welche wiederum die Kettenglieder der Zahnkette mechanisch verbinden. Gleichzeitig sind die Führungsrollen mechanisch in den Verstärkungselementen gelagert. Die Verstärkungselemente können gegeneinander durch die Führungsrollen fixiert und/oder an externen mechanischen Elementen befestigt sein, wobei die Zahnkette durch die in den Verstärkungselementen gelagerten Führungsrollen mit der Außenzahnschiene bzw. dem Außenzahnrad verspannt ist. Hierdurch werden die Kettenglieder der Zahnkette in den Zahnlücken der Außenzahnstange niedergehalten und eine Zwangsführung für die Zahnkette gebildet. Die Abstützeinrichtung hat somit eine krafterhöhende Wirkung, die Zahnkettenvorrichtung ist durch die Abstützeinrichtung verstärkt. Beim bestimmungsgemäßen Betrieb wirkende Kräfte können von der Zahnkette auf die Verstärkungselemente übertragen bzw. an diese weitergeleitet werden. Entsprechend werden Kräfte, die entgegen der Eingriffsrichtung von Zahnkette und Außenzahnschiene / Außenzahnrad wirken und somit zu einem Abheben bzw. Durchrutschen der Zahnkette führen können, im Rahmen der durch die krafterhöhend wirkenden Abstützeinrichtung realisierten Zwangsführung an die Verstärkungselemente weitergeleitet und von diesen kompensiert.

Vorteilhafterweise ist sichergestellt, dass die Zahnkette nicht von der Außenzahnschiene oder dem Außenzahnrad abhebt bzw. durchrutscht. Dies bewirkt, dass bei gleich großen Abmessungen mehrfach höhere Lasten durch die Zahnkette aufgenommen werden können und die Zahnkette zusätzlich noch unbegrenzt lang gestaltet werden kann, so dass eine höhere Zahl von Zähnen in Eingriff kommen können. Bei Ausführung der durch die Außenzahnschiene vorgegebenen, zwangsgeführten Fahrbahn mit linearem oder konvexem oder konkavem Verlauf kann die Zahnkette entsprechenden Bogen- oder Kurvenformen einer Außenzahnschiene oder eines Außenzahnrads geführt folgen. Weiterhin vorteilhaft kommt die Zahnkettenvorrichtung durch die krafterhöhende Abstützeinrichtung auch erhöhte Lasten bewegen.

Anwendungsbeispiele einer derart verstärkten Zahnkettenvorrichtung können weiterhin beispielsweise sein:
- Hubzylinder, wobei Hydraulik- oder Pneumatikzylinder durch einen mittels der Zahnkettenvorrichtung betreibbaren elektrischen Hubzylinder, insbesondere mit unbegrenztem Hub, ersetzbar sind,
- Planetengetriebe, wobei die Planetenräder durch die Zahnkettenvorrichtung (Nierenform) ersetzt werden, sodass bei dem jeweiligen Planetenrad sich mehrere Zähne gleichzeitig im Eingriff befinden und somit mehrfache Kräfte übertragen können.

Insbesondere sind die Führungsrollen gleichmäßig voneinander beabstandet angeordnet bzw. in den Verstärkungselementen gelagert. Vorzugsweise sind die Führungsrollen und/oder die Verstärkungselemente gleichartig ausgebildet.

Gemäß einer bevorzugten Weiterbildung kann vorgesehen sein, dass zur seitlichen Verbreiterung und kraftübertragenden Verstärkung der Führungsbahn zwei oder mehr, bevorzugt vier, Reihen von Kettenlaschen, insbesondere versetzt zueinander, beidseitig der Zahnkette angeordnet sind, wobei zumindest der Konturbereich einer der Reihen der Kettenlaschen, insbesondere die Konturbereiche aller Kettenlaschen, die Führungsbahn ausbilden. Insofern können die seitlich links und rechts eingesetzten Kettenlaschen der Zahnkette verdoppelt, bevorzugt vervierfacht, und jeweils versetzt angeordnet sein. Vorteilhafterweise wird die jeweilige Führungsbahn in der inneren oder äußeren Kontur der Zahnkette dadurch verbreitert und verstärkt, sodass die krafterhöhende Wirkung der Abstützeinrichtung und damit die mechanische Belastbarkeit der Zahnkettenvorrichtung nochmals gesteigert wird.

Gemäß einer bevorzugten Weiterbildung kann vorgesehen sein, dass die Höhe der, die Führungsbahn bildenden, Kettenlaschen die innenliegende und/oder außenliegende Verzahnung der Zahnkette überragt. In anderen Worten ist die Höhe der Kettenlaschen stets größer als die Dicke der Zahnkette. Vorteilhafterweise wird dadurch sichergestellt, dass die Abstützeinrichtung, insbesondere die Führungsrollen, die Funktionalität der Zahnkette nicht negativ beeinträchtigt, insbesondere die Verzahnungen der Zahnkette nicht mechanisch blockiert.

Gemäß einer bevorzugten Weiterbildung kann vorgesehen sein, dass im Bereich der Innenzahnräder die Führungsrollen zur Abstützung des Konturbereichs einseitig in einem Verstärkungselement gelagert sind, und zwischen den Innenzahnrädern die Führungsrollen die Zahnkette durchgreifen und beidseitig in den Verstärkungselementen gelagert sind, sodass zumindest bereichsweise die beidseitigen Führungsbahnen der Zahnkette abgestützt sind. In anderen Worten sind im Bereich der Innenzahnräder die Führungsrollen jeweils einseitig in einem der Verstärkungselemente gelagert. Im Bereich zwischen den Innenzahnrädern hingegen sind die Führungsrollen auf einer ersten Seite in dem einen Verstärkungselement und auf einer der ersten Seite gegenüberliegenden zweiten Seite in dem weiteren, dem zumindest einen Verstärkungselement gegenüberliegenden, Verstärkungselement gelagert. Die Führungsrollen stützen im Bereich der Innenzahnräder nur die Führungsbahn jener Seite der Zahnkette ab, an welcher die entsprechende Führungsrolle angeordnet ist. Im Bereich zwischen den Innenzahnrädern wiederum stützt jede der Führungsrollen beide seitlichen Führungsbahnen gleichzeitig ab. Im Bereich zwischen den Innenzahnrädern erstrecken sich die Führungsrollen von einem Verstärkungselement zu dem gegenüber liegenden Verstärkungselement. Insofern sind in diesem Bereich die Führungsrollen länger als die Breite der Kette, sodass sie die Breite durchgreifen. Im Bereich der Innenzahnräder wiederum entspricht die Länge der Führungsrollen im Wesentlichen der Breite der jeweils zugeordneten Führungsbahn. Vorteilhafterweise ist hierdurch eine mechanisch besonders belastbare Ausführung der Abstützeinrichtung bereitgestellt, bei welcher die krafterhöhende Wirkung nochmals gesteigert bzw. die Abstütz-/Niederhaltungsfunktion nochmals verbessert ist.

Gemäß einer bevorzugten Weiterbildung kann vorgesehen sein, dass die beiden seitlichen Verstärkungselemente durch, die Zahnkette durchgreifende, Führungsrollen starr mechanisch miteinander verbunden sind, und vorzugsweise die Innenzahnräder lagern. Die Abstützeinrichtung kann somit neben einer Lagerfunktion für die Innenzahnräder eine Verbindungsfunktion der Verstärkungselemente und eine Versteifungsfunktion für die gesamte Zahnkettenvorrichtung erfüllen. Vorteilhafterweise wird die mechanische Belastbarkeit der Zahnkettenvorrichtung dadurch weiter erhöht.

Grundsätzlich können die Verstärkungselemente als separate, die Führungsrollen lagernde Bauteile ausgebildet sein. Es ist ebenfalls denkbar, dass die Verstärkungselemente aus Gehäuseabschnitte bzw. Gehäuseteile eines, die Antriebsmechanik einhausenden Gehäuses ausgebildet sind. Auch können die Verstärkungselemente als Stabtragwerk oder ähnliches ausgebildet sein. Die Verstärkungselemente haben die Aufgabe, die Führungsrollen drehbar zu lagern, und können vorzugsweise auch die Innenzahnräder lagern. Gemäß einer bevorzugten Weiterbildung kann vorgesehen sein, dass zumindest ein Verstärkungselement, insbesondere beide Verstärkungselemente. als einstückig gefertigte Verstärkungsplatte ausgebildet ist. Vorteilhafterweise weist das Verstärkungselement eine besonders hohe mechanische Belastbarkeit auf und kann vorteilhaft einfach und kostengünstig hergestellt werden, beispielsweise durch Spritzguss- oder 3D-Druckverfahren. Die Verstärkungsplatte kann Ausnehmungen zur Gewichts- und Materialeinsparung aufweisen.

Gemäß einer bevorzugten Weiterbildung kann vorgesehen sein, dass jede Führungsrolle endseitig einen Lagerzapfen aufweist, mittels welchem die Führungsrolle in einer jeweiligen zu dem Lagerzapfen komplementären Lagerbuchse des Verstärkungselements drehbar gelagert ist. Vorzugsweise ist zwischen Lagerzapfen und Lagerbuchse ein Gleit- oder Wälzlager angeordnet. Vorzugsweise ist die Führungsrolle einstückig ausgebildet. Somit kann sich die Führungsrolle in ihrer Gesamtheit, also inklusive des Lagerzapfens, in bzw. um die Lagerbuchse drehen. Alternativ kann Führungsrolle zweiteilig ausgebildet sein, wobei der Lagerzapfen drehfest in der Lagerbuchse angeordnet ist und sich ein an dem Lagerzapfen drehbar gelagerter Rollabschnitt an den Lagerzapfen anschließt. Der Lagerzapfen kann zumindest formschlüssig, insbesondere kraft- und/oder stoffschlüssig, in der Lagerbuchse angeordnet, insbesondere eingesteckt sein. Vorteilhafterweise ist hierdurch eine konstruktiv einfach umsetzbare, sichere und mechanisch belastbare Möglichkeit zur Lagerung der Führungsrolle in dem Verstärkungselement bereitgestellt.

Gemäß einer bevorzugten Weiterbildung kann vorgesehen sein, dass zumindest einer der, die Zahnkette durchgreifenden, Führungsrollen eine Abstützverzahnung aufweist, die in die korrespondierende innenliegende Verzahnung oder außenliegende Verzahnung der Zahnkette eingreift. Die Abstützverzahnung kann somit im Wesentlichen komplementär zu der korrespondierenden Verzahnung der Zahnkette ausgebildet sein. Vorteilhafterweise werden dadurch die Führungsrollen zusätzlich an ihrer vorgesehenen Position fixiert und die Niederhaltefähigkeit wird nochmals verbessert, sodass insgesamt eine verbesserte Abstützung ermöglicht ist.

Gemäß einer bevorzugten Weiterbildung kann vorgesehen sein, dass die innenliegende Verzahnung und die außenliegende Verzahnung zueinander unterschiedlich ausgebildet sind. Vorzugsweise ist die innenliegende Verzahnung eine Spitzverzahnung und die außenliegende Verzahnung eine Evolventen-Verzahnung ist. Insbesondere greift die Spitzverzahnung in eine Evolventen-Verzahnung der Innenzahnräder ein. Insbesondere ist weiterhin die außenliegende Evolventen-Verzahnung mit einer Spitzverzahnung der Außenzahnstange oder des Außenzahnrads in Eingriff bringbar. Vorteilhafterweise ist hierdurch eine effektive Kraftübertragung sichergestellt, wobei weiterhin vorteilhaft die Zahnkettenvorrichtung entlang konvexer und konkaver Fahrbahnen verfahrbar ist.

Gemäß einer bevorzugten Weiterbildung kann vorgesehen sein, dass die Zahnkettenvorrichtung entlang der zumindest einen Außenzahnschiene oder entlang dem zumindest einen Außenzahnrad linear bewegbar ist, oder dass die Zahnkettenvorrichtung die zumindest eine Außenzahnschiene oder das zumindest eine Außenzahnrad antreibt. Die Zahnkettenvorrichtung kann somit bewegbar oder ortsfest angeordnet werden und eine Antriebsfunktion erfüllen bzw. als Antrieb dienen.

Vorteilhafterweise kann die Zahnkettenvorrichtung dadurch für einen Zahnkettenantrieb genutzt werden.

Gemäß einer bevorzugten Weiterbildung kann vorgesehen sein, dass die Anordnung der Führungsrollen auf den Verstärkungselementen einem Verzahnungskonturverlauf der Außenzahnschiene oder des Außenzahnrads folgt. In anderen Worten können die Führungsrollen so angeordnet sein, dass, bei einer Betrachtung der Zahnkettenvorrichtung von der Seite, in jedem Zahntal der Außenzahnschiene oder des Außenzahnrads eine Führungsrolle liegen kann, wobei sich die Zähne der Außenzahnschiene oder des Außenzahnrads in dem Bereich zwischen den Führungsrollen erstrecken. Somit kann eine gleichmäßige und an den Verzahnungskonturverlauf angepasste Verteilung der Führungsrollen vorgesehen sein. Der Abstand der Führungsrollen zueinander entspricht somit im Wesentlichen dem Abstand der Zahntäler der Außenzahnschiene. Vorteilhafterweise ist hierdurch eine besonders effiziente Kraftübertragungsmöglichkeit von Zahnkette zu der Abstützeinrichtung und damit effektive Abstützfunktion bereitgestellt.

In einem nebengeordneten Aspekt betrifft die Erfindung einen Zahnkettenantrieb mit zumindest einer Außenzahnschiene oder zumindest einem Außenzahnrand und einer Zahnkettenvorrichtung. Es wird vorgeschlagen, dass die Zahnkettenvorrichtung erfindungsgemäß, wie vorstehend beschrieben ausgebildet ist, wobei die außenliegende Verzahnung der Zahnkette mit der Außenzahnschiene oder dem Außenzahnrad in Eingriff steht und die Führungsbahn durch die Abstützeinrichtung gegen die Außenzahnschiene oder dem Außenzahnrad zur Ausbildung einer Zwangsführung abgestützt ist. Es ergeben sich die diesbezüglich im Vorfeld bereits genannten Vorteile.

Gemäß einer bevorzugten Weiterbildung kann vorgesehen sein, dass ein Antriebsmotor, insbesondere Elektromotor, einen Antrieb zumindest eines der Innenzahnräder der Zahnkettenvorrichtung bereitstellt, wobei das korrespondierende Innenzahnrad auf einer Antriebswelle des Antriebsmotors gelagert ist. Vorteilhafterweise kann der Zahnkettenantrieb somit zum Antreiben von Objekten genutzt werden, beispielsweise Aufzüge o.Ä. wie eingangs beschrieben.

### ZEICHNUNGEN

Weitere Vorteile ergeben sich aus der vorliegenden Zeichnungsbeschreibung. In den Zeichnungen sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- **Fig. 1**: Eine Teilexplosionsdarstellung einer vorteilhaften Zahnkettenvorrichtung in einer perspektivischen Ansicht,
- **Fig. 2**: eine seitliche Ansicht der Zahnkettenvorrichtung,
- **Fig. 3**: eine Querschnittsansicht der Zahnkettenvorrichtung von oben, und
- **Figs. 4A und 4B**: eine schematische Darstellung eines exemplarischen Gebrauchs der Zahnkettenvorrichtung.

In den Figuren sind gleichartige Elemente mit gleichen Bezugszeichen beziffert. Die Figuren zeigen lediglich Beispiele und sind nicht beschränkend zu verstehen.

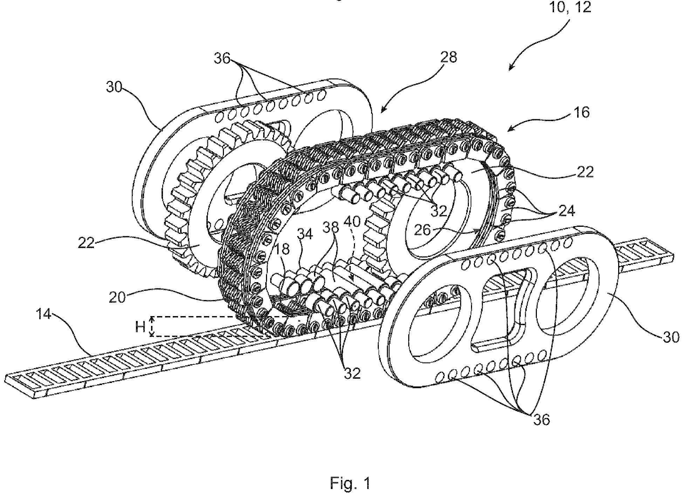

Figuren 1, 2 und 3 zeigen jeweils eine Darstellung einer vorteilhaften Zahnkettenvorrichtung 10. Die Zahnkettenvorrichtung ist Teil eines vorteilhaften Zahnkettenantriebs 12.

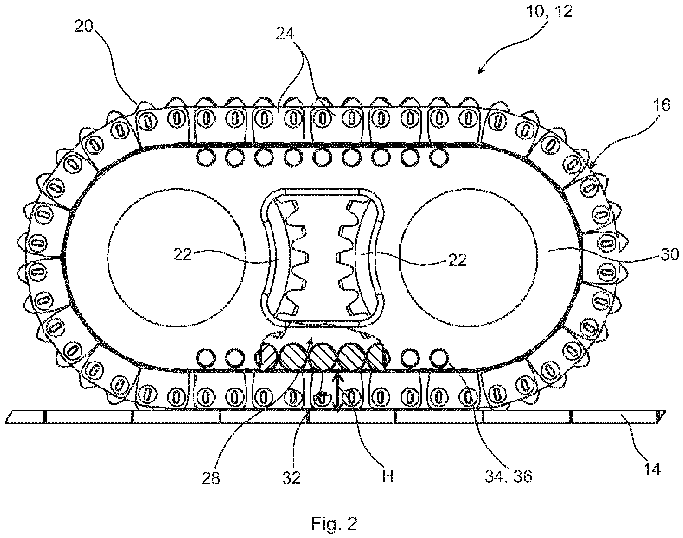

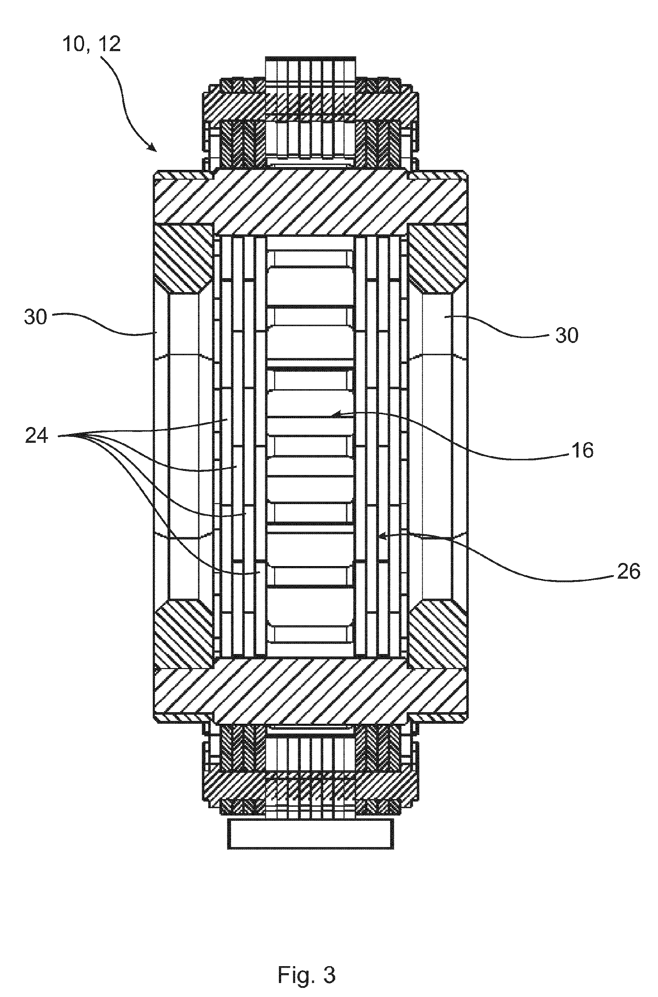

Figur 1 zeigt eine perspektivische Ansicht einer Teilexplosionsdarstellung der Zahnkettenvorrichtung 10. Figur 2 zeigt eine Seitenansicht der Zahnkettenvorrichtung im zusammengesetzten Zustand. Figur 3 zeigt einen Querschnitt durch die Zahnkettenvorrichtung mit Blick von oben.

Gemäß dem vorliegenden Ausführungsbeispiel ist die Zahnkettenvorrichtung 10 dazu ausgebildet, bei bestimmungsgemäßer Verwendung als Teil des Zahnkettenantriebs 12 entlang einer Außenzahnschiene 14 des Zahnkettenantriebs 12 linear bewegt zu werden oder die Außenzahnschiene 14 anzutreiben. Gemäß einem alternativen nicht gezeigten Ausführungsbeispiel kann es sich bei der Außenzahnschiene 14 auch um ein Außenzahnrad handeln.

Wie insbesondere in Figur 1 gut zu erkennen ist, umfasst die Zahnkettenvorrichtung eine flexible und geschlossene Zahnkette 16. Die Zahnkette 16 weist eine innenliegende Verzahnung 18 und eine außenliegenden Verzahnung 20 auf. Vorliegend handelt es sich bei der innenliegenden Verzahnung 18 um eine Spitzverzahnung und bei der außenliegenden Verzahnung 20 um eine Evolventen-Verzahnung. Die außenliegende Verzahnung 20 ist mit der Außenzahnschiene 14 in Eingriff bringbar bzw. steht bei bestimmungsgemäßem Gebrauch im Rahmen des Zahnkettenantriebs 12 mit der Außenzahnschiene 14 in Eingriff. Die Zahnkettenvorrichtung 10 umfasst weiterhin zwei Innenzahnräder 22, die zwischen gegenüberliegenden Endbogenbereichen der Zahnkette 10 angeordnet sind. Die Innenzahnräder 22 stehen in Eingriff mit der innenliegenden Verzahnung 18. Vorliegend ist zumindest eines der Innenzahnräder 22 durch einen aus Übersichtlichkeitsgründen nicht näher dargestellten Antriebsmotor des Zahnkettenantriebs 12 antreibbar, wobei das korrespondierende Innenzahnrad 22 auf einer ebenfalls nicht gezeigten Antriebswelle des Antriebsmotors gelagert ist. Im Rahmen des bestimmungsgemäßen Betriebs wird die von dem Antriebsmotor erzeugte Antriebskraft durch die miteinander in Eingriff stehenden Verzahnungen von Zahnkette 16, Innenzahnrädern 22 und Außenzahnschiene 14 auf die Außenzahnschiene 14 übertragen, sodass die Zahnkettenvorrichtung 10, wie vorstehend bereits erwähnt, entlang der Außenzahnschiene 14 verfahrbar ist.

Wie insbesondere in den Figuren 1 bis 3 weiterhin gezeigt ist, ist an gegenüberliegenden Seitenflanken der Zahnkette 10 jeweils zumindest eine Reihe von Kettenlaschen 24 angeordnet. Mittels der Kettenlaschen 24 sind die einzelnen Kettenglieder der Zahnkette 16 mechanisch miteinander verbunden und an ihrer vorbestimmten Position fixiert. Dabei definieren die Konturbereiche der Kettenlaschen 24 eine innenliegende und eine außenliegende Führungsbahn 26 der Zahnkette 10. Durch die Führungsbahn 26 ist beim Antreiben der Zahnkettenvorrichtung 10 die Bewegung der Zahnkette 16 geführt.

Bei gattungsgemäßen Zahnkettenvorrichtungen kann es im Rahmen des bestimmungsgemäßen Betriebs vorkommen, dass, insbesondere bei konvexen und/oder konkaven Bewegungsverläufen bzw. Verläufen der Außenzahnschiene 14, die Zahnkette 16 zumindest abschnittsweise temporär von der Außenzahnschiene 14 abhebt. In anderen Worten kann es aufgrund zu hoher Lasten und/oder des kurvigen Verlaufs der Außenzahnschiene 14 vorkommen, dass der Eingriff von außenliegender Verzahnung 20 und Außenzahnschiene 14 zumindest abschnittsweise temporär unterbrochen wird. Hierdurch kann der bestimmungsgemäße Betrieb der Zahnkettenvorrichtung 10 bzw. des Zahnkettenantriebs 12 negativ beeinträchtigt werden.

Zur Lösung dieser Problematik ist bei der vorliegenden Zahnkettenvorrichtung 10 bzw. dem vorliegenden Zahnkettenantrieb 12 vorteilhafterweise vorgesehen, dass die Zahnkettenvorrichtung 10 eine Abstützeinrichtung 28 umfasst. In Figur 1 ist die Abstützeinrichtung 28 in Explosionsdarstellung, in Figur 2 im zusammengesetzten Zustand gezeigt.

Die Abstützeinrichtung 28 umfasst vorliegend zwei Verstärkungselemente 30, die beidseitig an den Seitenflanken der Zahnkettenvorrichtung 10 angeordnet sind und sich entlang der Führungsbahn 26 der Zahnkette 16 erstrecken. Die Verstärkungselemente können als separate Elemente, insbesondere Verstärkungsplatten oder Verstärkungstragwerk ausgebildet sei. Alternativ können die Verstärkungselemente als Gehäuseabschnittsbereiche oder Gehäuseteile einer Gehäuseeinhausung ausgebildet sein. Die Abstützeinrichtung 28 umfasst weiterhin eine Mehrzahl von Führungsrollen 32, die jeweils drehbar in zumindest einem der Verstärkungselemente 30 gelagert sind und die Führungsbahn 26 der Zahnkette 16 zumindest abschnittsweise abstützen. Hierdurch wird die Zahnkette 16 vorteilhaft gegen die Außenzahnschiene 14 gepresst. Die Führungsrollen 32 stützen sich auf den Konturbereichen der Kettenlaschen 24 ab. Gleichzeitig sind die Führungsrollen 32 mechanisch in den Verstärkungselementen 30 fixiert. Die Verstärkungselemente 30 können über nicht gezeigte Wellen der Innenzahnräder 22 miteinander befestigt sein. Somit ist die Zahnkette 16 durch die Führungsrollen 32 zwischen der Außenzahnschiene 14 und den Verstärkungselementen 30 verspannt. Hierdurch werden die Kettenglieder der Zahnkette 16 in korrespondierenden Zahnlücken der Außenzahnschiene 14 niedergehalten. Somit ist durch die Abstützeinrichtung 28 eine Zwangsführung für die Zahnkette 16 realisiert, die zuverlässig dem Abheben und Durchrutschen der Zahnkette 16 von der Außenzahnschiene 14 vorbeugt. Die Abstützeinrichtung 28 hat eine krafterhöhende Wirkung.

Wie insbesondere in Figur 3 dargestellt, kann vorgesehen sein, dass zur seitlichen Verbreiterung und kraftübertragenden Verstärkung der Führungsbahn 26, zwei oder mehr, vorliegend vier, Reihen von Kettenlaschen 24 beidseitig der Zahnkette 16 versetzt zueinander angeordnet sind. Die Führungsbahn 26 ist durch die Konturbereiche sämtlicher Kettenlaschen 24 ausgebildet, die durch die mehreren Reihen deutlich verbreitet ist.

Wie weiterhin, insbesondere in Figur 1, gezeigt ist, sind im Bereich der Innenzahnräder 22 die Führungsrollen 32 einseitig in einem der Verstärkungselemente 30 gelagert. Im Bereich zwischen den Innenzahnrädern 22 hingegen durchgreifen die Führungsrollen 32 die Zahnkette 16 und sind beidseitig in den Verstärkungselementen 30 gelagert. Somit stützten im Bereich der Innenzahnräder 22 die Führungsrollen 32 die Führungsbahn 26 jener Seite der Zahnkette 16 ab, an welcher die entsprechende Führungsrolle 32 angeordnet ist. Im Bereich zwischen den Innenzahnrädern 22 wiederum stützt jede der Führungsrollen 32 beide seitlichen Führungsbahnen 26 ab. Zudem sind aufgrund des Durchgriffs im Bereich zwischen den Innenzahnrädern 22 die Verstärkungselemente 30 durch die Führungsrollen 32 mechanisch miteinander verbunden, so dass die Führungsrolle zur mechanischen Befestigung der beiden Verstärkungselement 30 aneinander dienen kann. Um das Durchgreifen zu ermöglichen ist vorgesehen, dass die Höhe H der Kettenlaschen 24, d.h. der Führungsbahn 26 zumindest die innen- oder außenliegende Verzahnungen 18 der Zahnkette 16 überragt, wie in Figuren 1 und 2 durch einen Doppelpfeil dargestellt ist.

Vorliegend können die Verstärkungselemente 30 als einstückig gefertigte Verstärkungsplatten ausgebildet. Die Führungsrollen 32 können entweder einstückig ausgebildet sein, oder können einen drehfesten Kernzylinder und einen darauf drehbar gelagerten Führungs-Zylindermantel aufweisen. Der drehfeste Kernzylinder kann insbesondere mit den beiden Verstärkungselementen 30 zur mechanischen Befestigung drehfest verbunden sein. Jede Führungsrolle 32 kann endseitig einen Lagerzapfen 34 aufweisen, mittels welchem entweder die drehbare Führungsrolle 32 in einer jeweiligen zu dem Lagerzapfen 34 komplementären Lagerbuchse 36 des Verstärkungselements (30) drehbar gelagert sein kann, bzw. der Lagerzapfen 34 kann als Endabschnitt des Kernzylinders drehfest mit den Verstärkungselementen 30 befestigt sein. Die Führungsrolle 32 umfasst weiterhin einen Walzenabschnitt 38, der sich an den Lagerzapfen 34 anschließt, und der im Falle eines mehrteiligen Aufbaus der Führungsrollen 32 aus dem Führungs-Zylindermantel ausgebildet sein kann. Der Walzenabschnitt 38 führt und lagert die Führungsbahn 26 bzw. den Konturbereich der Kettenlaschen 24 und presst die Zahnkette 16 gegen die Außenzahnschiene 14. Im Bereich zwischen den Innenzahnrädern 22, in welchem die Führungsrollen 32 die Breite der Zahnkette 16 durchgreifen, verbindet der Walzenabschnitt 38 die beiden endseitigen Lagerzapfen 34 der korrespondierenden Führungsrolle 32. Vorzugsweise sind zur drehbaren Lagerung der Führungsrollen 32 in den Verstärkungselementen 30 zwischen den jeweiligen Lagerzapfen 34 und Lagerbuchsen 36 Gleit- oder Wälzlager angeordnet, bzw. der Führungs-Zylindermantel ist durch eine Gleitschmierung auf dem Kernzylinder der Führungsrolle 32 drehbar gelagert.

Somit können die Führungsrollen 32 entweder einstückig und drehbar in den Verstärkungselementen 30 gelagert sein, oder in einem, vorliegend nicht gezeigten, Ausführungsbeispiel kann zweiteilig ausgebildet sein, und einen drehfesten Kernzylinder und einen darauf drehbar gelagerten Führungs-Zylindermantel umfasst. Der Lagerzapfen 34 ist durch Endabschnitte des drehfesten Kernzylinders ausgebildet und der Walzenabschnitt 38 ist durch den drehbaren Führungs-Zylindermantel bereitgestellt. Somit sind die Lagerzapfen 34 drehfest in der korrespondierenden Lagerbuchse 36 angeordnet und können die Verstärkungselemente mechanisch miteinander verbinden. Der Walzenabschnitt 38 ist drehbar auf dem Kernzylinder mit Lagerzapfen 34 gelagert, sodass er drehbar gegenüber den drehfesten Lagerzapfen 34 ist.

Vorzugsweise ist vorgesehen, dass die Anordnung der Führungsrollen 32 auf den Verstärkungselementen 30 einem Verzahnungskonturverlauf 42 der Außenzahnschiene 14 folgt. Somit sind die Führungsrollen 32 derart gleichmäßig voneinander beabstandet, dass der jeweilige Abstand im Wesentlichen dem Abstand der Zahntälern bzw. den Zähnen der Außenzahnschiene 14 entspricht.

Optional kann vorgesehen sein, dass zumindest eine der, die Zahnkette 16 durchgreifenden, Führungsrollen 32 eine Abstützverzahnung 40 aufweist. In Figur 1 ist die Abstützverzahnung 40 beispielhaft durch einen gestrichelten Pfeil angedeutet. Die Abstützverzahnung 40 greift in die korrespondierende innenliegende Verzahnung 18 oder außenliegenden Verzahnung 20 der Zahnkette 16 ein und sorgt dadurch für eine verbesserte Niederhaltefunktion, die zusätzlich oder alternativ zur Abstützung der durch die Kettenlaschen 24 definierten Führungsbahn 26 wirken kann.

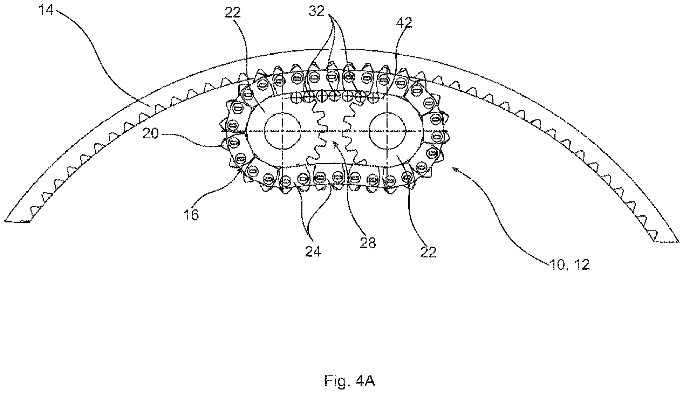

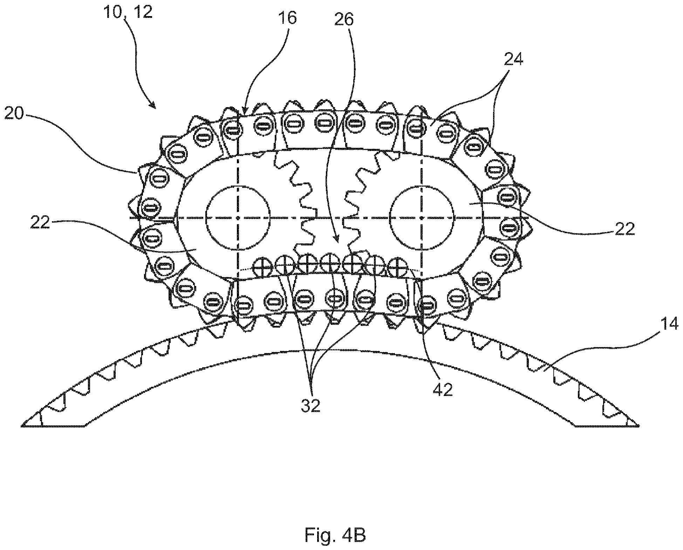

Figuren 4A und 4B zeigen jeweils beispielhaft den Zahnkettenantrieb 12 bei bestimmungsgemäßer Verwendung, wobei die Außenzahnschiene 14 oder ein Außenzahnrad einen konkaven (Figur 4A) oder einen konvexen (Figur 4B) Verlauf aufweist.

Wie zuvor bereits ausführlich erörtert, wird durch die vorteilhafte Abstützeinrichtung 28 sichergestellt, dass auch bei derartigen Kurven- bzw. Bögenverläufen der Eingriff der Zahnkette 16 in die Außenzahnschiene 14 zu jedem Zeitpunkt erhalten bleibt, da die Führungsrollen 32 entlang eines durch die Verstärkungselemente 30 vorgegebenen Verzahnungskonturverlauf 42 angeordnet sind. Dadurch wird verhindert, dass die Zahnkette 16 von der Außenzahnschiene 14 abhebt und durchrutscht. Dementsprechend ist die vorliegende Zahnkettenvorrichtung 10 bzw. der vorliegende Zahnkettenantrieb 12 bestens für derartige Verwendungszwecke geeignet, wobei vergleichsweise hohe Lasten effektiv und sicher bewegt werden können.

### Bezugszeichenliste

- 10: Zahnkettenvorrichtung
- 12: Zahnkettenantrieb
- 14: Außenzahnschiene
- 16: Zahnkette
- 18: Innenliegende Verzahnung
- 20: Außenliegende Verzahnung
- 22: Innenzahnräder
- 24: Kettenlaschen
- 26: Führungsbahn
- 28: Abstützeinrichtung
- 30: Verstärkungselemente
- 32: Führungsrollen
- 34: Lagerzapfen
- 36: Lagerbuchse
- 38: Walzenabschnitt
- 40: Abstützverzahnung
- 42: Verzahnungskonturverlauf
- H: Höhe der Kettenlaschen / Führungsbahn

## Patentansprüche

1. Zahnkettenvorrichtung (10) umfassend eine flexible und geschlossene Zahnkette (16), aufweisend eine innenliegende Verzahnung (18) und eine außenliegende Verzahnung (20), und zumindest zwei Innenzahnräder (22), die zwischen gegenüberliegenden Endbogenbereichen der Zahnkette (16) angeordnet sind und im Eingriff mit der innenliegenden Verzahnung (18) der Zahnkette (16) stehen, wobei die außenliegende Verzahnung (20) mit zumindest einer Außenzahnschiene (14) oder zumindest einem Außenzahnrad in Eingriff bringbar ist, und wobei an gegenüberliegenden Seitenflanken der Zahnkette (16) jeweils zumindest eine Reihe von Kettenlaschen (24) angeordnet ist, deren Konturbereiche eine innenliegende und eine außenliegende Führungsbahn (26) der Zahnkette (16) definieren, **dadurch gekennzeichnet, dass** eine Abstützeinrichtung (28) mit beidseitig an den Seitenflanken angeordneten und sich entlang der Führungsbahn (26) der Zahnkette (16) erstreckenden Verstärkungselementen (30) umfasst ist, wobei die Verstärkungselemente (30) eine Mehrzahl von drehbar gelagerten Führungsrollen (32) umfassen, und wobei die Führungsrollen (32) zumindest abschnittsweise die innenliegende und/oder die außenliegende Führungsbahn (26) der Zahnkette (16) abstützt, sodass durch die Abstützeinrichtung (28) eine zumindest abschnittsweise Zwangsführung der Zahnkette (16) gebildet ist.

2. Zahnkettenvorrichtung nach Anspruch 1, **dadurch gekennzeichnet, dass** zur seitlichen Verbreiterung und kraftübertragenden Verstärkung der Führungsbahn (26) zwei oder mehr, bevorzugt vier, Reihen von Kettenlaschen (24), insbesondere versetzt zueinander, beidseitig der Zahnkette (16) angeordnet sind, wobei zumindest der Konturbereich einer der Reihen der Kettenlaschen (24), insbesondere die Konturbereiche aller Kettenlaschen (24), die Führungsbahn (26) ausbilden.

3. Zahnkettenvorrichtung nach einem der vorherigen Ansprüche, **dadurch gekennzeichnet, dass** die Höhe (H) der, die Führungsbahn (26) bildenden, Kettenlaschen (24) die innenliegende und/oder außenliegende Verzahnung (20) der Zahnkette (16) überragt.

4. Zahnkettenvorrichtung nach Anspruch 3, **dadurch gekennzeichnet, dass** im Bereich der Innenzahnräder (22) die Führungsrollen (32) zur Abstützung des Konturbereichs einseitig in einem Verstärkungselement (30) gelagert sind, und zwischen den Innenzahnrädern (22) die Führungsrollen (32) die Zahnkette (16) durchgreifen und beidseitig in den Verstärkungselementen (30) gelagert sind, sodass zumindest bereichsweise die beidseitigen Führungsbahnen (26) der Zahnkette (16) abgestützt sind.

5. Zahnkettenvorrichtung nach einem der vorherigen Ansprüche, **dadurch gekennzeichnet, dass** die beiden seitlichen Verstärkungselemente (30) durch, die Zahnkette (16) durchgreifende, Führungsrollen (32) starr mechanisch miteinander verbunden sind, und vorzugsweise die Innenzahnräder (22) lagern.

6. Zahnkettenvorrichtung nach einem der vorherigen Ansprüche, **dadurch gekennzeichnet, dass** zumindest ein Verstärkungselement (30) als einstückig gefertigte Verstärkungsplatte ausgebildet ist.

7. Zahnkettenvorrichtung nach einem der vorherigen Ansprüche, **dadurch gekennzeichnet, dass** jede Führungsrolle (32) endseitig einen Lagerzapfen (34) aufweist, mittels welchem die Führungsrolle (32) in einer jeweiligen zu dem Lagerzapfen (34) komplementären Lagerbuchse (36) des Verstärkungselements (30) drehbar gelagert ist, vorzugsweise wobei zwischen Lagerzapfen (34) und Lagerbuchse (36) ein Gleit- oder Wälzlager angeordnet ist.

8. Zahnkettenvorrichtung nach einem der vorherigen Ansprüche, **dadurch gekennzeichnet, dass** zumindest eine der, die Zahnkette (16) durchgreifenden, Führungsrollen (32) eine Abstützverzahnung (40) aufweist, die in die korrespondierende innenliegende Verzahnung (18) oder außenliegende Verzahnung (20) der Zahnkette (16) eingreift.

9. Zahnkettenvorrichtung nach einem der vorherigen Ansprüche, **dadurch gekennzeichnet, dass** die innenliegende Verzahnung (18) und die außenliegende Verzahnung (20) zueinander unterschiedlich ausgebildet sind, vorzugsweise wobei die innenliegende Verzahnung (18) eine Spitzverzahnung und die außenliegende Verzahnung (20) eine Evolventen-Verzahnung ist, insbesondere wobei die Spitzverzahnung in eine Evolventen-Verzahnung der Innenzahnräder (22) eingreift, insbesondere wobei weiterhin die außenliegende Evolventen-Verzahnung mit einer Spitzverzahnung der Außenzahnschiene (14) oder des Außenzahnrads in Eingriff bringbar ist.

10. Zahnkettenvorrichtung nach einem der vorherigen Ansprüche, **dadurch gekennzeichnet, dass** die Zahnkettenvorrichtung (10) entlang der zumindest einen Außenzahnschiene (14) oder entlang dem zumindest einen Außenzahnrad linear bewegbar ist, oder dass die Zahnkettenvorrichtung (10) die zumindest eine Außenzahnschiene (14) oder das zumindest eine Außenzahnrad antreibt.

11. Zahnkettenvorrichtung nach einem der vorherigen Ansprüche, **dadurch gekennzeichnet, dass** die Anordnung der Führungsrollen (32) auf den Verstärkungselementen (30) einem Verzahnungskonturverlauf (42) der Außenzahnschiene (14) oder des Außenzahnrads folgt.

12. Zahnkettenantrieb (12) mit zumindest einer Außenzahnschiene (14) oder zumindest einem Außenzahnrand und einer Zahnkettenvorrichtung (10) nach einem der vorhergehenden Ansprüche, **dadurch gekennzeichnet, dass** die außenliegende Verzahnung (20) der Zahnkette (16) mit der Außenzahnschiene (14) oder dem Außenzahnrad in Eingriff steht und die Führungsbahn (26) durch die Abstützeinrichtung (28) gegen die Außenzahnschiene (14) oder das Außenzahnrad zur Ausbildung einer Zwangsführung abgestützt ist.

13. Zahnkettenantrieb nach Anspruch 12, **dadurch gekennzeichnet, dass** ein Antriebsmotor, insbesondere Elektromotor, einen Antrieb zumindest eines der Innenzahnräder (22) der Zahnkettenvorrichtung (10) bereitstellt, wobei das korrespondierende Innenzahnrad (22) auf einer Antriebswelle des Antriebsmotors gelagert ist.
